# EUROPEAN PATENT SPECIFICATION

(11) **EP 1 562 326 B1**
(45) Date of publication and mention of the grant of the patent: **15.04.2009**
(21) Application number: 05300067.5
(22) Date of filing: 28.01.2005
(51) Int. Cl.: H04L 12/24

(54) **Intelligent access control method for operations management personnel**
Intelligentes Zugangskontrollverfahren für Betriebsverwaltungspersonal
Procédé de contrôle d'accès intelligent pour le personnel d'un système de gestion

(30) Priority: 04.02.2004 US 770424
(43) Date of publication of application: 10.08.2005
(73) Proprietor: Alcatel Lucent, 75008 Paris (FR)
(72) Inventor: ABIGAIL, Shawn Gregory, K2M 2E1, KANATA (CA)
(74) Representative: Korakis-Ménager, Sophie

(56) References cited:
- US-A1- 2001 047 409
- US-A1- 2003 093 506
- US-A1- 2003 105 838
- US-A1- 2003 200 288
- US-B1- 6 285 688

## Description

### Field of the invention

The invention relates to communications infrastructure and services management, and in particular to operations management personnel access control methods in support of intelligent operations management access control.

### Background of the invention

In the field of communications operations management which include, but is not limited to: communications network management, communications systems management, and service provisioning Network Management Systems (NMS), Element Management Systems (EMS), and service provisioning software, are employed respectively to perform a variety of tasks including, but not limited to: commissioning/decommissioning communications infrastructure, commissioning/decommissioning services over the communications infrastructure, modifying communications infrastructure and provisioned service operational parameters, reporting, etc.

Operations management is becoming ever more complex due to a continuing adoption of new technologies and therefore it is an unreasonable expectation for operations management personnel to be aware at all times, and in all circumstances, of the impact a particular operations management action may have. Unfortunately a trend is being observed pointing out a correlation between an increasing operations management complexity and increasing costs incurred by service providers and customers due to experienced network/service outage. Large fractions of cost overheads are found to be incurred, at least in part, due to the fact that operations management personnel was not fully aware of the impact of operations management actions taken.

For example, the number of customer service connections provisioned via a physical communications link or a high level logical content transport tunnel is not provided operations management personnel in servicing the physical communications link or the high level logical content transport tunnel. A very large number of customers may be affected if a high bandwidth physical communications link or a high bandwidth high level content transport tunnel were taken out of service. Typically high level logical content transport tunnels have an associated signaling channel for connectivity management. Decommissioning the associated signaling channel leaves the high level logical content transport tunnel, and all content traffic conveyed therethrough, unmanaged. As another example, the amount of time required to recover a communications network node is not provided to operations network management personnel resetting the communications network node being serviced. As core communications network nodes are characterized by high throughput densities, lengthy reset times therefore lead to large numbers of connections experiencing network unavailability. Bringing down a Domain Names Service (DNS) server, blocks further connection establishment in an Internet Protocol communications network while established connections continue to convey content. As a further example, without actually experiencing a network outage, deleting an entire "hosts.deny" filter rule list on a gateway would lead to severe security implications wherein a failover from a secure network to an insecure network will be experienced.

While the above examples may intuitively be understood by highly trained and experienced operations management personnel, even good intentions could lead to undesirable network performance and network unavailability. As an example, in a service provisioning environment, performing reporting, such as billing, during peak operation time periods could affect service provisioning potentially violating Service Level Agreements due to an intensive access to a client database blocking other operations and potentially blocking customer transactions. As another example, a failover from a secure network to an insecure network may result from well intended innocent commissioning of an additional load balancing link/trunk directly between a public communications network and a private communications network without traversing a firewall/proxy.

In accordance with a current typical interaction between a operations management personnel and a management system and/or software implementing functionality provisioned thereon, individual operations management persons (operators) are granted certain levels of permissions to perform specific operations management actions in an exemplary operations management context. Such span of control is based on individual login identifiers corresponding to operations management personnel. For example, at least one operator having the highest permission level "super user" can execute any operations management action, multiple other operators, having lower permission levels, may only execute fewer and less service affecting operations management actions, respectively. The lowest permission level would be ascribed to an entry level operator and would for example permit the entry level operator to create/establish a content transport tunnel/path, yet permission to delete/tear-down a content transport tunnel/path would not be granted.

Problems with the current approach is experienced regardless of the training and experience of a particular operator. Even though the operator has the requisite certified training and permission to perform operations management actions at a certain level, the operator may not be knowledgeable of the impact on provisioned services, on infrastructure, and/or on resources a given operations management action may have in a particular situation. In respect of system management in a telecommunications context, a particular operator cleared for decommissioning physical links, may decommission a T1/E1 link potentially affecting 24/32 provisioned DSO services; the same permission clearing the operator to decommission an OC-192 link potentially affecting 129,024 provisioned DSO services. The only safeguard currently provided against critical service-affecting operations management actions is the well-known request confirmation presented to operators interacting with the management system via an interface which basically asks 'Are you sure?' which is typically regarded by operators just as an annoying delay and automatically answered affirmatively. More troubling, is the fact that typically such confirmation message windows automatically have the affirmative choice preselected!

There therefore is a need to solve the above mentioned issues.

US2001047409 discloses a network capacity evaluation and planning method performing based upon the traffic across the links of the network. Once a link's traffic volume has been measured, it is compared with the link's traffic capability, and the resulting parameters compared with the traffic and capability of other links of the network to create measures of network capacity and balance. Then, simulated changes to the network configuration may be made by substituting simulated traffic volume amounts and capabilities for selected link traffic measurements and capabilities, and the resulting measures of network capacity and balance may then be compared to determine whether the simulated changes represent a preferred network configuration.
US6285688 discloses a system and method for managing a telecommunications network. The system and method employs a network management architecture that provides an overlay in which network management functions are performed. The network management architecture includes a workstation function that provides a graphical user interface (GUI) for a user to interact with an object model of the physical telecommunications network, a telecommunications network management subsystem that provides an object model of the network including object models of network equipment and connectivity between the equipment, a database subsystem that stores "current" and "future" views of the network, and an object request broker that translates objects from a first object-oriented paradigm to a second object-oriented paradigm for use by the GUI. The network management architecture facilitates network design by determining network performance metrics. The network architecture can also be used to assess the performance of a given network configuration by virtue of simulation. The network architecture can also be used to initialize switchover logic for network restoration.

### Summary of the invention

The invention is defined in claim 1. Preferred embodiments of the method of claim 1 are defined in the dependent claims.

In accordance with an aspect of the invention, an intelligent management system ascertaining the real world impact of an operations management action to be performed is provided. The intelligent management system includes a logic module responsive to a request for performing the operations management action. The lo gic module queries a managed entity roster, determines the real world impact of the operations management action about to be performed, and formulates a request confirmation message stating the determined impact.

In accordance with another aspect of the invention, a method of providing a real world impact in respect of an operations management action about to be performed is provided. The method includes determining the real world impact of the operations management action about to be performed in response to a request for performing the operations management action. A request confirmation message stating the real world impact is formulated.

In accordance with a further aspect of the invention, the method further includes displaying the confirmation request message informing of the real world impact of the operations management action to be performed to operations management personnel.

In accordance with a further aspect of the invention, the method further includes selectively denying the request for performing the operations management action based on the determined impact.

In accordance with yet another aspect of the invention, the method further includes selectively denying the request for performing the operations management action based on a combination of the determined impact and a permission level of the operator requesting the operations management action to be performed.

Advantages are derived from an informed decision making in respect of the real world impact assessment provided in real-time in connection with requesting each operations management action to be performed, and a finer granularity of control over operations management actions to be performed by operations management personnel.

### Brief description of the drawings

The features and advantages of the invention will become more apparent from the following detailed description of the exemplary embodiment(s) with reference to the attached diagrams wherein:
FIG. 1 is a schematic diagram showing exemplary elements implementing an exemplary intelligent management system and components of an exemplary intelligent service management software application providing an impact assessment in accordance with an exemplary embodiment of the invention; and
FIG. 2 is a flow diagram showing process steps in providing, in accordance with the exemplary embodiment of the invention, an intelligent impact assessment in respect of an operations management action to be performed.

It will be noted that in the attached diagrams like features bear similar labels.

### Detailed description of the embodiments

Information regarding the impact a given operations management action would have in a particular situation is not readily apparent nor readily available even if the operator wanted to determine the impact before executing the operations management action.

In accordance with an exemplary embodiment of the invention, should operations management action impact information be available to operations network management personnel, a different or delayed operations management action may be taken to avoid negatively affecting communications network infrastructure, services, and customers, thereby reducing related overhead operations management costs.

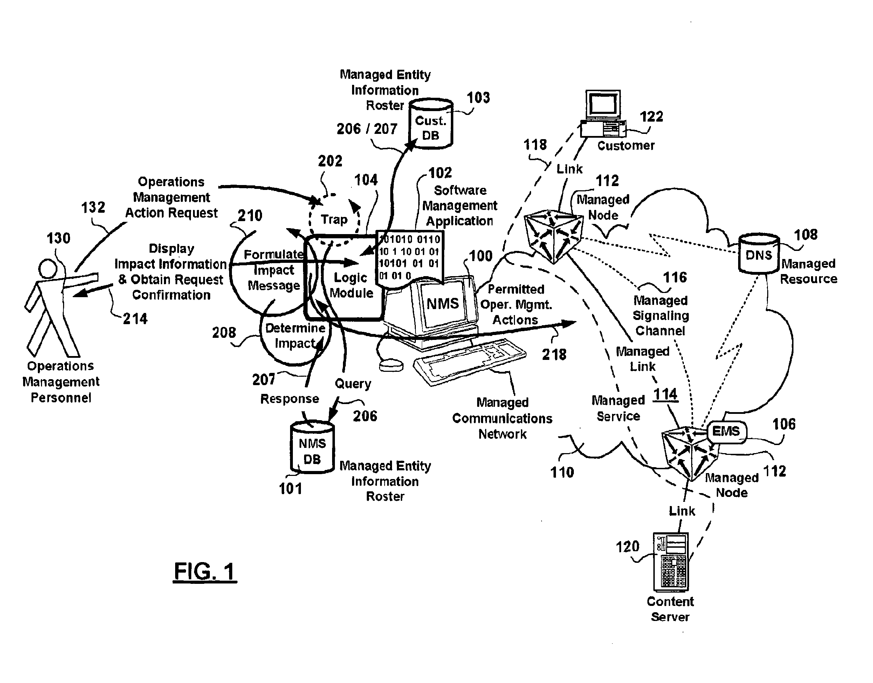

FIG. 1 is a schematic diagram showing exemplary elements implementing an exemplary intelligent management system 100 and components of an exemplary intelligent service management software application 102 providing an impact assessment in accordance with the exemplary embodiment of the invention.

In accordance with the exemplary embodiment of the invention, the management system (100) includes a logic module 104 determining 208 and presenting 214 operations management personnel with action-related impact information in connection with obtaining confirmation for operations management actions to be performed. Although the invention will be described herein below in respect of communications network management in a managed communications network 110, the invention is not limited thereto, other management systems (100) including, but not limited to: Network Management Systems (NMS) 100, Element Management Systems EMS 106, information management systems 108, security management systems, service provisioning systems, online transaction management systems, transaction clearance management systems, etc. may also implement a logic module (104) determining 208 and presenting 214 operations management personnel with action-related impact information in interacting therewith.

In accordance with the exemplary embodiment of the invention, service provisioning management software application 102 includes a logic module 104 determining 208 and presenting 214 operations management personnel with action-related impact information in connection with obtaining confirmation for operations management actions to be performed. Although the invention will be described herein below in respect of service provisioning in a managed communications network, the invention is not limited thereto, other software applications including, but not limited to: accounting, billing, reporting, statistics generation, security, transaction management, transaction clearance, etc.

In the context of a communications network management, a logic module 104 associated with a network management system 100 queries a network management database 101 tracking a containment hierarchy of managed entity instances in the managed communications network 110 including, but not limited to: physical links 114, network nodes 102, shelves, interface cards, ports, trunks, logical links 114, logical ports, virtual routers, content transport tunnels 118, managed service connections 118, managed signaling channels 116, network management policies, etc. In a service provisioning context, a logic module 104 associated with a software service management application 102 may also query a customer database 103 tracking customer lists, service policies, customer Service Level Agreements, etc. Service/Network policies may include schedule maintenance period specifications.

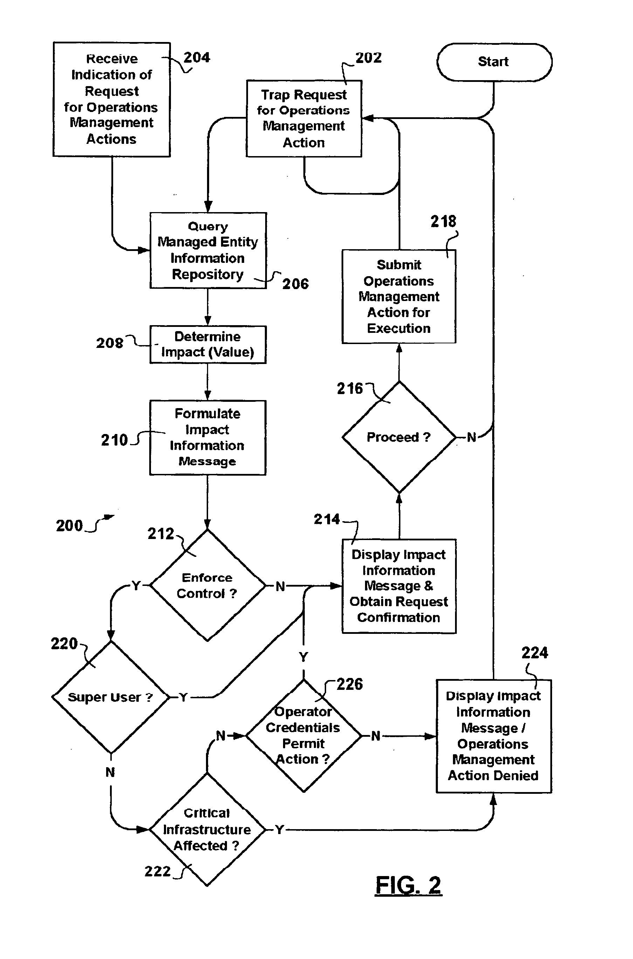

FIG. 2 is a flow diagram showing process steps in providing, in accordance with the exemplary embodiment of the invention, an intelligent impact assessment in respect of an operations management action to be performed.

In accordance with an implementation of the exemplary embodiment of the invention, the logic module 104 traps 202 operations management actions execution requests 132, queries 206 a management information roster 101 based on each the operations management action 132 to be performed for impact related information, obtains 207 impact related information, computes an impact level in determining 208 of the impact, formulates 210 a request confirmation message stating the determined corresponding real world impact, and restricts (212) performing the operations management action based on the determined impact level (222) and based on the operator's access level/qualifications 226. An operations management action request confirmation message is displayed informing the operator of the consequences of the action if committed.

In accordance with the exemplary embodiment of the invention, employing a logic module 104 to determine 204 and to present 214 operations management personnel with impact information in respect of requested action execution, makes operations management personnel aware consequences respective actions will have before such operations management actions are performed (see "N" branch of step 212).

The logic module 104 determines 208 in real-time the impact a particular operations management action will have in response to a request 132 for performing the action. Accordingly, the operator 130 will be presented 214 with an impact informing message in requesting confirmation of the request to perform the operations management action such as, but not limited to: "17,345 subscribers will experience loss of service for 5 minutes! Do you wish to continue?" just as the operations management action is about to be performed. In a service provisioning management context, an exemplary confirmation request would ask: "143 separate SLA agreements will be violated during the remote access server reboot! Do you wish to continue with the reboot?" In an electronic transaction processing management context, an exemplary confirmation request would ask: "Deletion of the end-of-day report, if not backed-up, results in the loss of 1,752,983 financial transaction traces. Continue?" In an information management context, an exemplary confirmation request might ask: "73 files from a secure access location are to be copied to a public access location. Proceed?" Such warning messages 214 regarding real-world impact of various operations management actions do not by themselves necessarily enforce access control over operations management actions 212, rather such management systems provide immediate intelligent feedback in assisting even experienced operations management personnel to make informed decisions. Management personnel benefits from being made aware of the specific impact leading to a reduced number of outages and reduced incurred costs typically caused by human error, insufficient training and/or experience, inattentiveness, etc. Setting the default selection to "No" would also trade annoyance for increased safety.

In accordance with the exemplary embodiment of the invention, an aggregate impact value/level may be determined 208 based on several types of impact exemplary categorized such as, but not limited to: network impact, critical infrastructure impact, service(s) impact, customer impact, security impact, etc. Within each category there may be different subtypes of impact, for example:
- Network impact:
   i. Size of the network: number of nodes and/or number of paths affected;
   ii. Severity of impact: outage, degradation, re-routable, etc.;
   iii. Network becoming unmanaged;
   iv. Duration of impact;
- Critical resource (911) impact:
   i. Infrastructure affected;
   ii. Unavailability of standby, hot standby, redundant infrastructure;
   iii. Duration of impact;
- Security impact:
   i. Infrastructure and services exposed;
   ii. Level of security breach, implications;
   iii. Duration of impact;
- Service impact:
   i. Type of service: best-effort (IP), committed bit rate (ATM), 911, etc.;
   ii. Number of customers;
   iii. Duration of impact;
   iv. Severity of impact: outage, degradation, unmanaged, etc.;
- Customer impact:
   i. Limited to customer Quality-of-Service (QoS) classes;
   ii. Number of customers;
   iii. Duration of impact;
   iv. Severity of impact: outage, degradation, unmanaged, etc.;
   v. Limited to provisioning new subscribers.

In accordance with the exemplary embodiment of the invention, permissions are granted (see "Y" branch at step 212) to operations management personnel 130 based on the impact a particular operations management action 132 will have in a given situation.

For example, an operator 130 may be allowed to decommission a communications network node 112 if no active content transport tunnels 114 are currently being provisioned, and prevented in step 226 if there is at least one active content transport tunnel 114. The operator 130 would however be able to decommission the communications network node 112 irrespective of a then current best-effort traffic throughput conveyed via the communications network node 112 which would be rerouted, by design, albeit incurring a small delay. As another example, operator 130 may not be allowed to perform operations management actions on critical infrastructure equipment provisioning 911 services, nor on 911 service reserved content transport paths, while being able to effect full control otherwise, as shown at step 222.

In accordance with the exemplary embodiment of the invention, a determined impact (step 208) may also be compared 226 to a permission level granted to the particular operator 130. If the determined level of impact (208) is within a range associated with the permission level granted to the operator, then permission to perform the action 132 is granted, following the "Y" branch of step 226, and the requisite action may be submitted for execution in step 218.

In accordance with an exemplary implementation, an operator 130 is given permission to perform operations management actions based on a weighted impact value determined in accordance with a predetermined set of rules. For example, a novice operator may be granted permission to perform actions of "an impact of 17 points or less" where: 2 points of impact are assigned to each medium sized customer, 10 points to each large customer, 20 points if the action would cause an outage that caused a Service Level Agreement (SLA) non-compliance for any "Gold Class" customer, etc. Such an operations management action access control (212) would prevent novice operations from performing certain operations management actions 132 even if the impact is understood, thereby leading to fewer network/service outages and therefore to reduced operations management overhead costs. Such stringent access control may be relaxed during scheduled maintenance windows.

The embodiments presented are exemplary only and persons skilled in the art would appreciate that variations to the above described embodiments may be made. The scope of the invention is solely defined by the appended claims.

## Claims

1. A method for granting operators of a communication network permission to perform management actions according to an access level, said network being equipped with a network management system (100) which comprises a network management system database (101) with all managed entity instances in said communication network and a human machine interface for enabling communication between an operator and said network management system, **characterized in that** it comprises the steps of:
upon receipt (204) over said human-machine interface of a request for a specified management action from said operator, tracking (206) in said network management system database (101) all managed entities affected by said request;
before performing said request by said network management system, determining an impact value (208) of said request on operation of said network by ascertaining the impact of said request on all managed entities affected by said request; and
comparing (226) said impact value with an access level, associated with
said operator that issued said request,
granting permission to perform said management action only if said impact value corresponds to said access level.

2. The method of claim 1, further comprising performing said management action from said network management system if permission has been granted.

3. The method of claim 1 or 2, further comprising generating impact information which explicitly advises said operator on the impact of said management action on said network, and displaying said impact information on said human-machine interface for enabling said operator to decide upon submitting said management action for execution or not.

4. The method of claim 3, further comprising in the case when said operator decides to perform said management operation based on said impact information, disabling said request if said impact value does not correspond to said access level.

5. The method of anyone of claims 1 to 4, wherein said impact value is determined as an aggregated impact value using a plurality of impact categories.

6. The method of claim 5, wherein said aggregated impact value is determined by weighting an impact level calculated for each impact category.

7. The method of claim 5 or 6, wherein the impact categories include one or more of a network impact level, a critical resource impact level, a service impact level, a customer impact level, and a security impact level.

8. The method of claim 7, wherein said network impact level is determined by assessing at least the number of managed entities affected by said management action, the severity and duration of the impact of said management action on said managed entities.

9. The method of claim 7, wherein said service impact level is determined by assessing at least the type of services affected by said management action, the number of customers affected by said management action, the severity and duration of the impact of said management action on said services and customers.

10. The method of claim 7, wherein said customer impact level is determined by assessing at least the quality of service classes affected by said management action, the number of customers affected by said management action, the severity and duration of the impact of said management action on the customers affected by said management action.

11. The method of claim 7, wherein said security impact level is determined by assessing at least the number of managed entities exposed to a security threat as a result of said management action, the level and the duration of the security threat.

12. The method of anyone of claims 1 to 11, further comprising tracking in a customer database (103) all client managed entities affected by said management action.

13. The method of claim 12, further comprising determining said impact value by taking into consideration the impact of the management action on said client managed entities.

## Patentansprüche

1. Ein Verfahren, um Betreibern eines Kommunikationsnetzwerks die Berechtigung zu gewähren, Verwaltungsvorgänge gemäß einer Zugriffsstufe auszuführen, wobei das besagte Netzwerk mit einem Netzwerkverwaltungssystem (100) ausgestattet ist, welches eine Netzwerkverwaltungssystem-Datenbank (101) mit allen in dem besagten Kommunikationssystem verwalteten Entitätsinstanzen sowie eine Mensch-Maschine-Schnittstelle zur Kommunikation zwischen einem Betreiber und dem besagten Netzwerkverwaltungssystem umfasst, **dadurch gekennzeichnet, dass** es die folgenden Schritte umfasst:
Nach Empfang (204) einer Anfrage des besagten Betreibers für einen spezifizierten Verwaltungsvorgang über die besagte Mensch-Maschine-Schnittstelle, Aufspüren (206) aller von der besagten Anfrage betroffenen verwalteten Entitäten in der besagten Netzwerkverwaltungssystem-Datenbank (101);
vor Ausführen der besagten Anfrage durch das besagte Netzwerkverwaltungssystem, Ermitteln eines Wertes der Auswirkung (208) der besagten Anfrage auf den Betrieb des besagten Netzwerks durch Ermitteln der Auswirkung der besagten Anfrage auf alle verwalteten Entitäten, welche von der besagten Anfrage betroffen sind; und
Vergleichen (226) des besagten Wertes der Auswirkung mit einer Zugriffsstufe, welche dem besagten Betreiber, der die besagte Anfrage ausgegeben hat, zugeordnet ist,
Gewähren der Berechtigung, den besagten Verwaltungsvorgang auszuführen, nur, wenn der besagte Wert der Auswirkung der besagten Zugriffsstufe entspricht.

2. Das Verfahren nach Anspruch 1, weiterhin umfassend das Ausführen des besagten Verwaltungsvorgangs durch das besagte Netzwerkverwaltungssystem, wenn die Berechtigung gewährt wurde.

3. Das Verfahren nach Anspruch 1 oder 2, weiterhin umfassend das Erzeugen einer Information über die Auswirkung, welche den besagten Betreiber ausdrücklich auf die Auswirkung des besagten Verwaltungsvorgangs auf das besagte Netzwerk hinweist, sowie das Anzeigen der besagten Information über die Auswirkung auf der besagten Mensch-Maschine-Schnittstelle, so dass der Betreiber darüber entscheiden kann, ob der besagte Verwaltungsvorgang zur Ausführung unterbreitet werden soll oder nicht.

4. Das Verfahren nach Anspruch 3, weiterhin umfassend, falls der besagte Betreiber entscheidet, den besagten Verwaltungsvorgang entsprechend der besagten Information über die Auswirkung auszuführen, das Sperren der Anfrage, wenn der besagte Wert der Auswirkung nicht der besagten Zugriffsstufe entspricht.

5. Das Verfahren nach einem beliebigen der Ansprüche 1 bis 4, wobei der besagte Wert der Auswirkung als ein aggregierter Auswirkungswert unter Verwendung einer Vielzahl von Auswirkungskategorien ermittelt wird.

6. Das Verfahren nach Anspruch 5, wobei der besagte aggregierte Auswirkungswert durch Wuchtung einer für jede Auswirkungskategorie kalkulierten Auswirkungsstufe ermittelt wird.

7. Das Verfahren nach Anspruch 5 oder 6, wobei die Auswirkungskategorien eine oder mehrere der folgenden Auswirkungsstufen umfassen: Auswirkungsstufe auf das Netzwerk, kritische Auswirkungsstufe auf die Ressourcen, Auswirkungsstufe auf den Dienst, Auswirkungsstufe auf den Kunden und Auswirkungsstufe auf die Sicherheit.

8. Das Verfahren nach Anspruch 7, wobei die besagte Auswirkungsstufe auf das Netzwerk durch die Bewertung von mindestens der Anzahl der von dem besagten Verwaltungsvorgang betroffenen verwalteten Entitäten, des Schweregrads und der Dauer der Auswirkung des besagten Verwaltungsvorgangs auf die besagten verwalteten Entitäten ermittelt wird.

9. Das Verfahren nach Anspruch 7, wobei die besagte Auswirkungsstufe auf den Dienst durch die Bewertung von mindestens dem Typ der von dem besagten Verwaltungsvorgang betroffenen Dienste, der Anzahl der von dem besagten Verwaltungsvorgang betroffenen Kunden, des Schweregrads und der Dauer der Auswirkung des besagten Verwaltungsvorgang auf die besagten Dienste und Kunden ermittelt wird.

10. Das Verfahren nach Anspruch 7, wobei die besagte Auswirkungsstufe auf den Kunden durch die Bewertung von mindestens dem Typ der von dem besagten Verwaltungsvorgang betroffenen Dienstgüteklassen, der Anzahl der von dem besagten Verwaltungsvorgang betroffenen Kunden, des Schweregrads und der Dauer der Auswirkung des besagten Verwaltungsvorgang auf die von dem besagten Verwaltungsvorgang betroffenen Kunden ermittelt wird.

11. Das Verfahren nach Anspruch 7, wobei die besagte Auswirkungsstufe auf die Sicherheit durch die Bewertung von mindestens der Anzahl der verwalteten Entitäten, welche einer Sicherheitsbedrohung als Ergebnis des besagten Verwaltungsvorgangs ausgesetzt sind, des Grads und der Dauer der Sicherheitsbedrohung ermittelt wird.

12. Das Verfahren nach einem beliebigen der Ansprüche 1 bis 11, weiterhin umfassend das Aufspüren aller von dem besagten Verwaltungsvorgang betroffenen kundenverwalteten Entitäten in einer Kunden-Datenbank (103).

13. Das Verfahren nach Anspruch 12, weiterhin umfassend das Ermitteln des besagten Auswirkungswertes durch Berücksichtigung der Auswirkung des Verwaltungsvorgangs auf die besagten kundenverwalteten Entitäten.

## Revendications

1. Procédé pour accorder aux opérateurs d'un réseau de communication l'autorisation d'effectuer des actions de gestion en fonction d'un niveau d'accès, ledit réseau étant équipé d'un système de gestion du réseau (100) qui comprend une base de données (101) de système de gestion du réseau contenant toutes les instances d'entité administrées dans ledit réseau de communication et une interface homme/machine pour permettre la communication entre un opérateur et ledit système de gestion du réseau, **caractérisé en ce qu'**il comprend les étapes suivantes :
sur réception (204), par le biais de ladite interface homme/machine, d'une demande de réalisation d'une action de gestion donnée de la part dudit opérateur, suivi (206) dans ladite base de données (101) de système de gestion du réseau de toutes les entités administrées qui sont concernées par ladite demande ;
avant l'exécution de ladite demande par ledit système de gestion du réseau, détermination d'une valeur d'impact (208) de ladite demande d'opération dudit réseau en déterminant l'impact de ladite demande sur toutes les entités administrées affectées par ladite demande ; et
comparaison (226) de ladite valeur d'impact avec un niveau d'accès, associé avec ledit opérateur qui a émis ladite demande ;
octroi de l'autorisation d'effectuer ladite action de gestion uniquement si ladite valeur d'impact correspond audit niveau d'accès.

2. Procédé selon la revendication 1, comprenant en plus la réalisation de ladite action de gestion par ledit système de gestion du réseau si l'autorisation a été accordée.

3. Procédé selon la revendication 1 ou 2, comprenant en plus la génération d'une information d'impact qui informe explicitement ledit opérateur de l'impact de ladite action de gestion sur ledit réseau, et affichage de ladite information d'impact sur ladite interface homme/machine pour permettre audit opérateur de décider de soumettre ou non ladite action de gestion en vue de son exécution.

4. Procédé selon la revendication 3, comprenant en plus, dans le cas où ledit opérateur décide d'effectuer ladite opération de gestion en se basant sur ladite information d'impact, la désactivation de ladite demande si ladite valeur d'impact ne correspond pas audit niveau d'accès.

5. Procédé selon l'une quelconque des revendications 1 à 4, ladite valeur d'impact étant déterminée sous la forme d'une valeur d'impact collective en utilisant une pluralité de catégories d'impact.

6. Procédé selon la revendication 5, ladite valeur d'impact collective étant déterminée en pondérant un niveau d'impact calculé pour chaque catégorie d'impact.

7. Procédé selon la revendication 5 ou 6, les catégories d'impact comprenant une ou plusieurs des suivantes : niveau d'impact sur le réseau, niveau d'impact sur une ressource critique, niveau d'impact sur un service, niveau d'impact sur un client et niveau d'impact sur la sécurité.

8. Procédé selon la revendication 7, ledit niveau d'impact sur le réseau étant déterminé en évaluant au moins le nombre d'entités administrées affectées par ladite action de gestion, la sévérité et la durée de l'impact de ladite action de gestion sur lesdites entités administrées.

9. Procédé selon la revendication 7, ledit niveau d'impact sur le service étant déterminé en évaluant au moins le type des services affectés par ladite action de gestion, le nombre de clients affectés par ladite action de gestion, la sévérité et la durée de l'impact de ladite action de gestion sur lesdits services et clients.

10. Procédé selon la revendication 7, ledit niveau d'impact sur le client étant déterminé en évaluant au moins la qualité des classes de service affectées par ladite action de gestion, le nombre de clients affectés par ladite action de gestion, la sévérité et la durée de l'impact de ladite action de gestion sur les clients affectées par ladite action de gestion.

11. Procédé selon la revendication 7, ledit niveau d'impact sur la sécurité étant déterminé en évaluant au moins le nombre d'entités administrées exposées à un risque pour la sécurité résultant de ladite action de gestion, le niveau et la durée du risque pour la sécurité.

12. Procédé selon l'une quelconque des revendications 1 à 11, comprenant en plus le suivi dans une base de données des clients (103) de toutes les entités administrées par un client affectées par ladite action de gestion.

13. Procédé selon la revendication 12, comprenant en plus la détermination de ladite valeur d'impact en prenant en compte l'impact de l'action de gestion sur lesdites entités administrées par un client.
